# EUROPEAN PATENT SPECIFICATION

(11) **EP 0 637 734 B1**
(45) Date of publication and mention of the grant of the patent: **12.08.1998**
(21) Application number: 94850098.8
(22) Date of filing: 09.06.1994
(51) Int. Cl.: G01L 5/00

(54) **Load sensing bearing**
Lager mit Lastsensor
Palier avec capteur de charge

(30) Priority: 06.08.1993 SE 9302576
(43) Date of publication of application: 08.02.1995
(73) Proprietor: AB SKF, S-415 03 Göteborg (SE)
(72) Inventor: Bankeström, Jan-Olof, S-421 39 Göteborg (SE)
(74) Representative: Westman, P. Börje I.

(56) References cited:
- DE-C- 4 225 134
- GB-A- 2 193 812
- US-A- 3 132 319
- US-A- 4 175 430

## Description

The present invention refers to roller bearings with the ability to sense and determine a bearing load in magnitude as well as in direction.

In many connections where primarily large roller bearings come to use it is from an aspect of process control of great interest to be able to determine the momentary load of the bearing. Thus one can for example with knowledge about the bearing load in an ore mill control the degree of filling of the mill at an optimal level from an aspect of milling. Further it is possible to continuously monitor the condition of the bearing by means of the bearing load, since deviations from normal values may indicate different error functions or damages on the bearing.

For such purposes one has previously suggested different types of force measurement bearings, where the forces and loads are measured with strain gauge transducers located at the inner and/or the outer ring, which by influence of changing load, which occurs during operation, obtain a measurable change of electric resistance of the transducer whereby load variations according to the principle for an amplitude modulated carrier frequency system generates a carrier frequency the amplitude of which represents the measurement value. This means that the rings have to be provided with a great number of strain gauge transducers, at the same time as a relatively complicated and thereby costly calibration of the bearing is required. Also for the rest there are certain imperfections in these prior systems, which are known for example through US-A-4,203,319.

US-A-4,175,430 discloses a device for measurement of load applied on very large rolling element bearings having a plurality of rollers disposed between rails and wherein a sensor in form of a linear displacement transducer provided in a cavity in one roller monitors a dimension of said cavity, to establish the load applied on the roller in question. Such arrangement can not be readily used for an ordinary roller bearing having rollers disposed between an outer and an inner ring as the load on such a bearing roller varies as the roller moves in the circular path thereby moving between the loaded zone of the bearing and zones of more or less load.

The object of the present invention is to offer a load sensing roller bearing, in particular of large dimensions and which is not afflicted with drawbacks of previous solutions, and this has been achieved by providing the bearing with the features defined in the patent claim 1.

Through the solution according to the invention, which allows measurement of the actual roller load directly in the roller, one attains that calibration, which is necessary by previous solutions, in order to eliminate influence caused by the casing and the like have been possible to be eliminated, which implies that the load sensing bearing according to the invention constitutes a practically finished end product, in contrast to classic force measuring bearings, which are ready first after mounting and subsequent calibration.

In the following, the invention will be described in greater detail with reference to the embodiment shown in the enclosed drawings.
Fig. 1 shows in cross section a double row spherical roller bearing designed in accordance with the invention,
Fig. 2 shows schematically a portion of the bearing according to Fig. 1 with a roller contained therein in cross section, and
Fig. 3 is a schematic illustration of the bearing according to the invention connected to a computerized measurement system.

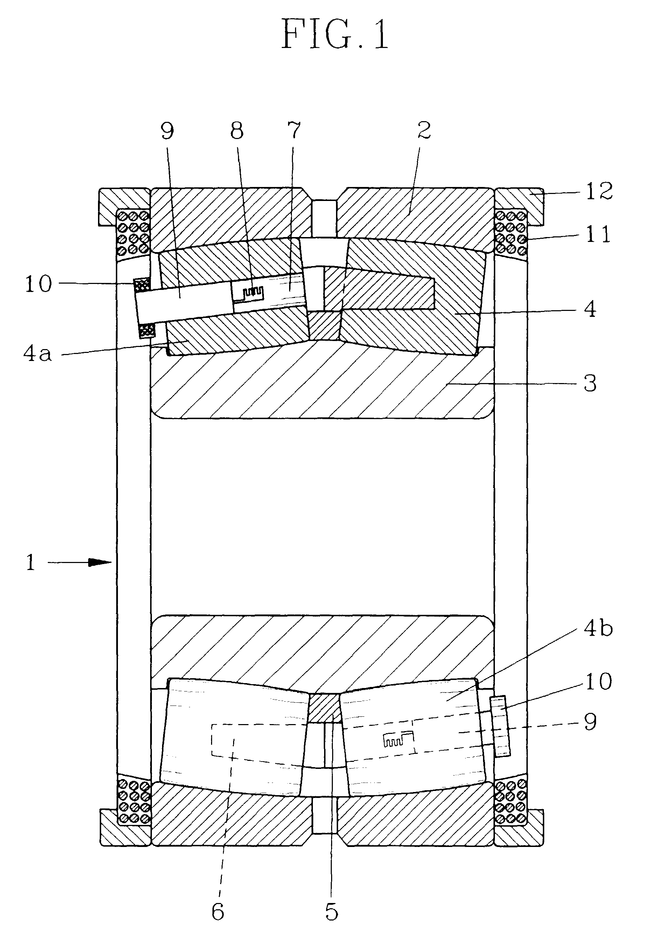

In Fig. 1 a double row spherical radial roller bearing 1 is shown in cross section including an outer ring 2, an inner ring 3 provided therein, and a number rollers 4 arranged between the bearing rings, which are guided and kept separated by means of a spacer ring 5 and a holder 6. According to the invention in each roller row the roller 4a and 4b respectively have been provided with a coaxial central bore 7, in which is provided at least one sensor 8, for example a strain gauge transducer, which is arranged preferably in the circumferential direction and connected to a miniaturized amplifier/transmitter 9, which is mounted in the bore 7 as well. A small coil 10 is mounted in connection to the amplifier/transmitter 9 in the bore 7 and the end thereof protrudes outside the end of the roller 4a and 4b respectively. This coil 10 arranged in the measuring roll communicates with a large, stationary coil 11 provided at the stationary bearing ring, that is by the outer ring 2 in the example shown. In the example this stationary, external coil 11 is fixed to the outer ring 2 by means of e.g. a retainer ring 12 attached to the ring end face by means of screws, but of course the stationary coil 11 may also be bonded to the end face of the stationary ring, or attached by any other method to a housing, not shown, which encases the bearing.

The stationary coil 11 provides the coil 10 arranged in the roller 4a and 4b respectively with energy, and the coil 10 arranged in the bore 7 sends continous load data, in the form of strain values from the sensors 8, which values are representative of the force or load to which the roller 4a and 4b respectively provided with measuring equipment are continously exposed. In such a way one obtains continuous measurement values of the bearing load, and by means of a separate coil provided in the bearing housing or the like not shown, one may let the instrument device of the roller give an impulse when a given position at the bearing is passed, whereby one also may obtain an orientation of the bearing and thereby possibility to make an absolute direction determination for the load. In this way the coil system is used for energy supply to the amplifier/transmitter as well as for signal transmission.

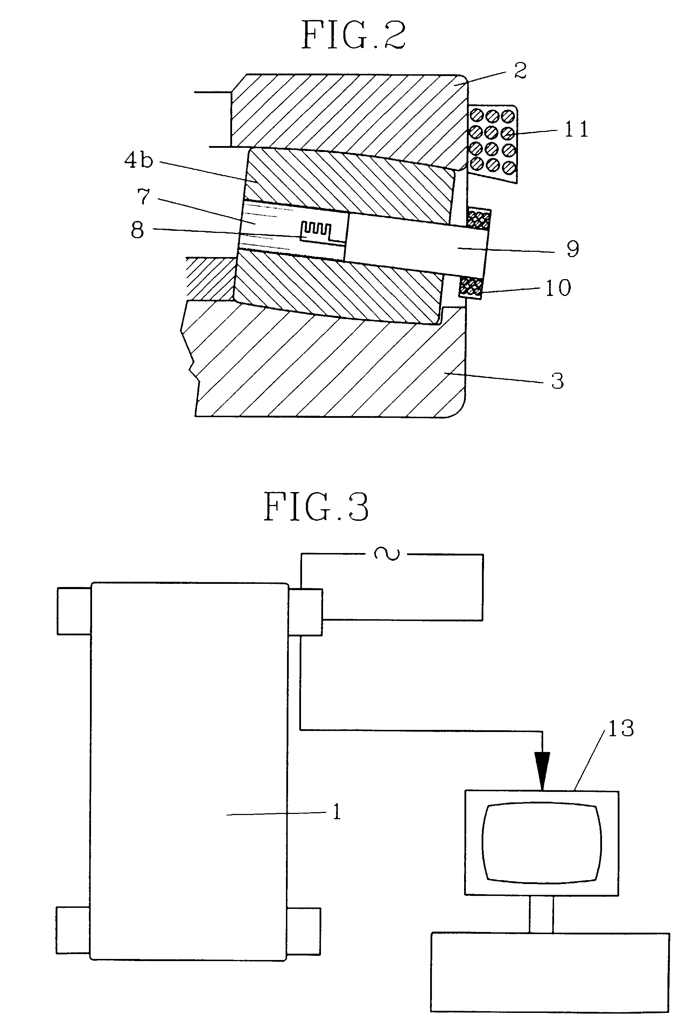

In Fig. 2 is shown in larger scale a section of the bearing according to the invention, and with a roll 4a provided with a measuring device in cross section and herein is indicated in a more distinct way, if yet diagrammatically how sensors 8 in the form of strain gauge transducers can be mounted on the wall of the bore 7.

In Fig. 3 is schematically illustrated how the signals emitted from the sensors in a roller in each roller row in the bearing according to the invention via the coil system are transmitted to a computer 13, in which the signals are processed and evaluated, by a method, which does not constitute any real part of the present invention.

With a bearing of this type it is possible by a simple and reliable method to measure the total magnitude of the bearing load and direction, in the plane of the bearing as well as axially, which may be important to optimize certain processes where bearings are exposed to process conditioned forces and loads, which may affect the process result.

Further, by this method one may acquire knowledge about an error function of a bearing, for example if a bearing that should be axially free of load, suddenly turns out to carry an axial load.

In addition, with the measuring results obtained it is possible to determine the internal load distribution of a bearing, which is of importance when calculating the bearing life time and at the design stage and also at mounting of the bearing take actions to control the load distribution.

Direct damages on the race tracks of bearing and the roller bodies may also be detected through measurement of the roller load.

The measurement may be carried out either continuously in real time or by random sampling and even if the example shown refers to a double row spherical roller bearing the invention is naturally also applicable on cylindric or conical roller bearings, for example spherical axial roller bearings, and so on.

The sensors 8 illustrated as strain gauge transducers have been shown to be arranged in middle of the hole 7 but they may also be provided at both ends of the hole 7 or axially separated and it is also possible to connect several strain gauge transducers in a bridge form.

In the drawing and the specification has been shown and indicated that one roller in each row of roller bodies is provided with a measurement device, but it is naturally implicit that more than one roller in each roller body row may be provided with such a device, even if the complexity in the measurements hereby increases, as well as the cost of the equipment.

The roll provided with the device has been shown with a centrally located through bore, but it is also possible to arrange several eccentrically located bores, for example four bores arranged symmetrically about the roller centre, and it is neither necessary that the bore passes through.

In the figures the distance between the stationary coil and the movable coil arranged in the roller 4a, 4b, is shown at an oversized proportion, while this distance in the reality is only a few millimetres.

As has been indicated, the sensors used may be of other types than strain gauge transducers, even if these have proved to give a good function.

Signal transmission from, as well as energy input supply to the roll/the rolls may be achieved by another method than has been illustrated and described, such as for example by radio transmission or by pulsed microwave technique or the like.

The invention is neither for the rest limited to the embodiments shown in enclosed drawings and the embodiments described in connection thereto, but modifications are possible within the scope of the subsequent claims.

## Claims

1. A device comprising:
a roller bearing (1), including:
a non-rotatable bearing ring (2) having a longitudinal axis,
a rotatable bearing ring (3) spaced radially from said non-rotatable bearing ring to form an annular space therebetween, said rotatable bearing ring (3) being rotatable relative to said non-rotatable bearing ring (2) about said longitudinal axis, and
a plurality of rollers (4,4a,4b) disposed in said annular space during operation of said roller bearing; and
a load measuring system for measuring loads imposed upon said roller bearing, including:
a sensor (8) mounted on at least one of said rollers (4a,4b) for measuring forces applied to the roller bearing (1) and emitting signals representative of bearing load, said sensor (8) being displaceable along a circular path during movement of at least one roller (4a,4b),
a signal transmitter (9) operatively connected to said sensor (8) for transmitting said signals emitted therefrom, said signal transmitter including (9) a first coil (10) electrically and physically connected to said sensor (8) to be displaced therewith along a circular path when said sensor is displaced, and
a signal receiver for receiving said transferred signals, said signal receiver including a second coil (11) mounted non-rotatably to said non-rotatable ring (2) at a location such that the circular path in which said first coil (10) is displaced is located inside said second coil (11).

2. A device as claimed in claim 1,
**wherein** said rotatable bearing ring (3) is situated radially inside said non-rotatable bearing ring (2), said first coil (10) being situated radially inside of said second coil (11).

3. A device as claimed in claim 1,
**wherein** said second coil (11) is mounted on a side of said non-rotatable bearing ring (2).

4. A device as claimed in claim 1,
**wherein** said sensor (8) is mounted in a bore (7) formed in said at least one roller (4a, 4b).

5. A device as claimed in claim 1,
**wherein** the sensor (8) comprises a strain gauge.

6. A device as claimed in claim 4,
**characterized therein**, that the transmitter (9) comprises a transmitter/amplifier mounted in said bore (7) and electrically connected to said sensor (8), said first coil (10) being electrically connected to said transmitter/amplifier.

## Patentansprüche

1. Wälzlagervorrichtung mit
einem nicht drehbaren Lagerring (2) mit einer Längsachse,
einem drehbaren Lagerring (3), der mit radialem Abstand zu dem nicht drehbaren Lagerring (2) angeordnet ist, um zwischen ihnen einen ringförmigen Raum auszubilden und relativ zu dem nicht drehbaren Ring (2) um die Längsachse drehbar ist, und
einer Vielzahl von Wälzkörpern (4, 4a, 4b), die im Betrieb des Lagers in dem ringförmigen Raum angeordnet sind, sowie
einem Lastmeßsystem zum Messen der auf das Wälzlager einwirkenden Belastungen, wobei die Wälzlagervorrichtung im übrigen folgendes aufweist:
wenigstens einen an einem der Wälzkörper (4a, 4b) zum Messen von auf das Wälzlager (1) einwirkenden Kräften und Aussenden von die Lagerbelastung darstellenden Signalen montierten Sensor (8), der während der Bewegung des betreffenden Wälzkörpers (4a, 4b) entlang einer Kreisbahn verschieblich ist,
einen Signalübertrager (9), der funktional an den Sensor (8) zum Übertragen der von diesem ausgesendeten Signale angeschlossen ist, und eine erste Spule (10) aufweist, die elektrisch und physisch mit dem Sensor (8) verbunden ist, um mit diesem entlang einer Kreisbahn verschoben zu werden, wenn sich der Sensor (8) verlagert, sowie
einen Signalempfänger zum Empfangen der übertragenen Signale, der eine zweite Spule (11) besitzt, die undrehbar an dem nichtdrehbaren Ring (2) an einer solchen Stelle befestigt ist, daß die Kreisbahn, auf welcher sich die erste Spule (10) bewegt, in der zweiten Spule (11) liegt.

2. Vorrichtung nach Anspruch 1, **dadurch gekennzeichnet**, daß der drehbare Lagerring (3) radial innerhalb des nicht drehbaren Lagerrings (2) und die erste Spule (10) radial innerhalb der zweiten Spule (11) liegt.

3. Vorrichtung nach Anspruch 1, **dadurch gekennzeichnet**, daß die zweite Spule (11) an einer Seite des nicht drehbaren Lagerrings (2) angeordnet ist.

4. Vorrichtung nach Anspruch 1, **dadurch gekennzeichnet**, daß der Sensor (8) in einer Bohrung (7) montiert ist, die in dem betreffenden Wälzkörper (4a, 4b) ausgebildet ist.

5. Vorrichtung nach Anspruch 1, **dadurch gekennzeichnet**, daß der Sensor (8) einen Dehnungsmeßstreifen aufweist.

6. Vorrichtung nach Anspruch 4, **dadurch gekennzeichnet**, daß der Übertrager (9) einen Übertrager/Verstärker aufweist, der in der Bohrung (7) montiert ist und elektrisch mit dem Sensor (8) verbunden ist, und die erste Spule (10) an den Übertrager/Verstärker elektrisch angeschlossen ist.

## Revendications

1. Dispositif comprenant:
un roulement (1) à rouleaux, comprenant:
une bague de roulement non-tournante (2) présentant un axe longitudinal, une bague de roulement tournante (3) espacée radialement de ladite bague de roulement non-tournante de manière que soit formé un espace annulaire entre ces bagues, ladite bague de roulement tournante (3) pouvant tourner par rapport à ladite bague de roulement non-tournante (2) autour dudit axe longitudinal, et
une pluralité de rouleaux (4, 4a, 4b) disposés dans ledit espace annulaire pendant le fonctionnement dudit roulement à rouleaux; et
un système de mesure de charges pour mesurer les charges appliquées audit roulement à rouleaux, comprenant:
un capteur (8) monté sur au moins un des rouleaux (4a, 4b) pour mesurer les forces appliquées au roulement (1) à rouleaux et pour émettre des signaux représentatifs d'une charge à laquelle est soumise le roulement, ledit capteur (8) pouvant être déplacé le long d'un chemin circulaire pendant le déplacement d'au moins un rouleau (4a, 4b),
un émetteur (9) de signaux relié fonctionnellement audit capteur (8) pour émettre lesdits signaux émis par cet émetteur, ledit émetteur de signaux (9) comprenant une première bobine (10) reliée électriquement et physiquement audit capteur (8) de manière à être déplacée avec ce dernier le long d'un chemin circulaire quand ledit capteur est déplacé, et
un récepteur de signaux destiné à recevoir lesdits signaux transférés, ledit récepteur de signaux comprenant une deuxième bobine (11) montée de façon non-tournante sur ladite bague non-tournante (2) à un endroit tel que le chemin circulaire dans lequel ladite première bobine (10) est déplacée se trouve à l'intérieur de la deuxième bobine (11).

2. Dispositif selon la revendication 1, dans lequel ladite bague de roulement tournante (3) est située radialement à l'intérieur de ladite bague de roulement non-tournante (2), ladite première bobine (10) étant située radialement à l'intérieur de ladite deuxième bobine (11).

3. Dispositif selon la revendication 1, dans lequel ladite deuxième bobine (11) est montée sur un côté de ladite bague de roulement non tournante (2).

4. Dispositif selon la revendication 1, dans lequel ledit capteur (8) est monté dans un trou (7) formé dans ledit rouleau (4a, 4b).au nombre d'au moins un.

5. Dispositif selon la revendication 1, dans lequel le capteur (8) comprend une jauge de contrainte.

6. Dispositif selon la revendication 4, caractérisé en ce que l'émetteur (9) comprend un émetteur/amplificateur monté dans ledit trou (7) et relié électriquement audit capteur (8), ladite première bobine (10) étant reliée électriquement audit émetteur/amplificateur.
